# EUROPÄISCHE PATENTSCHRIFT

(11) **EP 1 847 139 B1**
(45) Veröffentlichungstag und Bekanntmachung des Hinweises auf die Patenterteilung: **26.12.2012**
(21) Anmeldenummer: 06707963.2
(22) Anmeldetag: 01.02.2006
(51) Int. Cl.: H04W 88/18

(54) **VERFAHREN UND KOMMUNIKATIONSSYSTEM ZUR ÜBERTRAGUNG VON SPRACHSIGNALEN UND KONFIGURATIONS-NETZWERKELEMENT ZUR DURCHFÜHRUNG DES VERFAHRENS**
METHOD AND COMMUNICATION SYSTEM FOR THE TRANSMISSION OF SPEECH SIGNALS, AND CONFIGURATION NETWORK ELEMENT FOR CARRYING OUT SAID METHOD
PROCEDE ET SYSTEME DE COMMUNICATION POUR TRANSMETTRE DES SIGNAUX VOCAUX ET ELEMENT DE RESEAU DE CONFIGURATION POUR METTRE EN OEUVRE CE PROCEDE

(30) Priorität: 07.02.2005 DE 102005005561
(43) Veröffentlichungstag der Anmeldung: 24.10.2007
(73) Patentinhaber: SIEMENS AKTIENGESELLSCHAFT, 80333 München (DE)
(72) Erfinder: DRASCHER, Thorsten, 58093 Hagen (DE); HÜLSKEMPER, Michael, 46569 Hünxe (DE); LORENZ, Frank, 42111 Wuppertal (DE)
(86) Internationale Anmeldenummer: PCT/EP2006/050602
(87) Internationale Veröffentlichungsnummer: WO 2006/082208

(56) Entgegenhaltungen:
- EP-A- 0 884 884
- US-A1- 2002 107 593
- US-B1- 6 600 738

## Beschreibung

Die Erfindung betrifft ein Verfahren zur Übertragung von Sprachsignalen zwischen einem sendenden Kommunikationsgerät und einem empfangenden Kommunikationsgerät über einen Übertragungsweg durch ein oder mehrere Kommunikationsnetze hinweg, wobei von den Sprachsignalen auf ihrem Übertragungsweg insgesamt eine Vielzahl von Sprachsignal-Verarbeitungseinheiten und/oder Sprachcodec-Einheiten durchlaufen wird.

Bei der WO 99/20021 überträgt ein Mobilfunkgerät Sprachsignale über ein Mobilfunknetz und ein daran angekoppeltes Festnetz an ein Kommunikationsgerät wie z.B. Internet- Telefon. Dabei ist das Festnetz ein Datennetzwerk, das Datenpakete überträgt. Das an ihn angeschlossene Kommunikationsgerät überträgt und empfängt Datenpakete in Übereinstimmung mit dem Protokoll dieses Festnetzes. Es weist zusätzlich einen Sprachcodec entsprechend dem des Mobilfunkgeräts zur Erzeugung von Sprachparametern auf. Es kann deshalb die Originalsprache aus den Sprachparametern synthetisieren, die vom Mobilfunkgerät gesendet worden und in den Datenpaketen enthalten sind, die bei ihm von dem Datennetzwerk bzw. Festnetz ankommen. Entsprechend erzeugt das Kommunikationsgerät Sprachparameter in abgehenden Datenpaketen. Zur Übertragung der Sprachsignale werden die Sprachparameter als solche zwischen dem Mobilfunkgerät und dem Festnetzkommunikationsgerät übertragen. Ein ähnliches Dokument ist z.B. US2002/0107593 A1.

In der Praxis kann es vorkommen, dass Sprachsignale eines sendenden Kommunikationsgeräts auf ihrem Übertragungsweg zu einem empfangenden Kommunikationsgerät mehrere Sprachsignal-Verarbeitungseinheiten und/oder Sprachcodec- Einheiten durchlaufen. Eine derartige mehrfache Sprachsignalverarbeitung auf dem Übertragungsweg kann jedoch zu unerwünschten, insbesondere unkontrollierten Beeinflussungen oder Beeinträchtigungen der Sprachqualität der zu übertragenden Sprachsignale bzw. deren Sprachparameter führen. Kritisch für die Qualität der Übertragung von Sprachsignalen kann hierbei insbesondere die mehrfache Anwendung von ähnlichen oder gleichen SprachsignalVerarbeitungsalgorithmen auf dem Übertragungsweg der Sprachsignale sein. So ist es möglich, dass durch die Überlagerung bzw. Kombination von mehreren Sprachsignalverarbeitungsalgorithmen eine Verschlechterung der Signalqualität erfolgt, obwohl jeder einzelne Algorithmus diese Qualität verbessern würde. Ebenso kritisch für die Qualität kann eine Transcodierung der Sprachparameter durch Verwendung unterschiedlicher Sprachcodecs, d.h. Sprach-Encoder/Decoder, in verschiedenen Abschnitten des Übertragungswegs sein. Derartige negative Wechselwirkungen auf die Sprachqualität zu übertragender Sprachsignale sind umso wahrscheinlicher, je größer zum Aufbau des jeweiligen Übertragungswegs die Komplexität des Kopplungsgrades und die Anzahl der dabei beteiligten Kommunikationsnetze, sowie die Anzahl von dabei benutzten unterschiedlichen Übertragungsprotokollen und unterschiedlichen Anwendungsumgebungen bzw. Applikationen ist.

Die Erfindung liegt die Aufgabe zugrund, einen Weg aufzuzeigen, wie trotz der Mehrfacheinwirkung durch eine Vielzahl von Sprachsignal-Verarbeitungseinheiten und/oder Sprachcodec- Einheiten auf dem Übertragungsweg von Sprachsignalen zwischen einem sendenden Kommunikationsgerät und einem empfangenden Kommunikationsgerät eine ausreichende Sprachqualität sichergestellt werden kann. Diese Aufgabe wird bei einem Verfahren der eingangs genannten Art dadurch gelöst, dass für den vom jeweilig beteiligten Kommunikationsnetz aktuell bereitgestellten Übertragungsweg durch mindestens eine Konfigurations-Netzwerkeinheit derjenige Audioparametersatz aus einer Vielzahl von für unterschiedliche Übertragungswege abgespeicherten Audioparametersätzen ausgewählt wird, der für den aktuell bereitgestellten Übertragungsweg eine höhere Sprachübertragungsqualität als die für die übrigen Übertragungswege abgespeicherten Audioparametersätze bewirkt, und dass von der Konfigurations-Netzwerkeinheit mit Hilfe dieses ausgewählten Audioparametersatzes mindestens eine der durchlaufenen Sprachsignal-Verarbeitungseinheiten und/oder Sprachcodec- Einheiten des sendenden und/oder empfangenden Kommunikationsendgeräts und/oder mindestens eines der im jeweilig beteiligten Kommunikationsnetz durchlaufenen Netzelemente für die Übertragung der Sprachsignale über den aktuellen Übertragungsweg konfiguriert wird.

Netzwerkseitig wird also durch mindestens eine Konfigurations- Netzwerkeinheit eine Vielzahl von Audioparametersätzen bereitgehalten, die verschiedenen Übertragungswegen über ein Kommunikationsnetz oder mehrere Kommunikationsnetze hinweg zwischen einem sendenden Kommunikationsgerät und einem empfangenden Kommunikationsgerät zugeordnet sind. Durch die Konfigurations- Netzwerkeinheit wird derjenige Audioparametersatz aus der Vielzahl von für unterschiedliche Übertragungswege abgespeicherten Audioparametersätzen ausgewählt, der für den aktuell bereitgestellten Übertragungsweg eine höhere Sprachübertragungsqualität als die für die übrigen Übertragungswege abgespeicherten Audioparametersätze bewirkt. Mit Hilfe dieses ausgewählten Audioparametersatzes kann dann von der Konfigurations-Netzwerkeinheit mindestens eine der mehreren Sprachsignal-Verarbeitungseinheiten und/oder Sprachcodec- Einheiten im aktuell bereitgestellten Übertragungsweg zur Übertragung von Sprachsignalen in kontrollierter Weise konfiguriert bzw. eingestellt werden. Dadurch können Beeinträchtigungen oder Störungen der Sprachqualität der jeweilig über diesen Übertragungsweg übertragenen Sprachsignale weitgehend vermieden werden. Dies gilt insbesondere dann, wenn der Übertragungsweg mehrfach Sprachsignal- Verarbeitungseinheiten mit ähnlichen oder sogar gleichen Sprachsignal-Verarbeitungsprozeduren bzw. - algorithmen enthält. Auf der Basis der abgespeicherten Audioparametersätze für unterschiedliche Übertragungswege können somit das sendende und/oder das empfangende Kommunikationsgerät und/oder das jeweilig beteiligte Netzelement im jeweiligen Übertragungsweg in einen Betriebsmodus versetzt werden, der eine für die jeweilig gegebenen Übertragungsbedingungen optimierte Signalverarbeitung erlaubt. Zusätzlich oder unabhängig hiervon gilt in vorteilhafter Weise Entsprechendes für den Fall, dass aufgrund verschiedenartiger Sprachcodecs entlang dem jeweiligen Übertragungsweg ein oder mehrere Transcodierungen der Sprachparameter der jeweilig übermittelten Sprachsignale durchgeführt werden. Unter einer Transcodierung wird dabei die Umwandlung der Sprachsignale von einem ersten Sprachcodec in einen zweiten, verschiedenen Sprachcodec verstanden.

Die Erfindung betrifft auch ein Kommunikationssystem zur Übertragung von Sprachsignalen zwischen einem sendenden Kommunikationsgerät und einem empfangenden Kommunikationsgerät über einen Übertragungsweg durch ein oder mehrere Kommunikationsnetze hinweg, wobei in den Übertragungsweg insgesamt eine Vielzahl von Sprachsignal-Verarbeitungseinheiten und/oder Sprachcodec-Einheiten eingefügt sind, welches dadurch gekennzeichnet ist, dass mindestens eine Konfigurations- Netzwerkeinheit zur Auswahl desjenigen Audioparametersatzes aus einer Vielzahl von für unterschiedliche Übertragungswege abgespeicherten Audioparametersätzen vorgesehen ist, der für den aktuell bereitgestellten Übertragungsweg eine höhere Sprachübertragungsqualität als die für die übrigen Übertragungswege abgespeicherten Audioparametersätze bewirkt, und dass die Konfigurations- Netzwerkeinheit Steuermittel zum Konfigurieren mindestens eine der durchlaufenen Sprachsignal-Verarbeitungseinheiten und/oder Sprachcodec- Einheiten des sendenden und/oder empfangenden Kommunikationsgeräts und/oder mindestens eines der im jeweilig beteiligten Kommunikationsnetz durchlaufenen Netzelemente für die Übertragung der Sprachsignale über den aktuellen Übertragungsweg aufweist.

Weiterhin betrifft die Erfindung auch eine Netzwerkeinheit mit Steuermitteln zur Durchführung des erfindungsgemäßen Verfahrens.

Sonstige Weiterbildungen der Erfindung sind in den Unteransprüchen wiedergegeben.

Die Erfindung und ihre Weiterbildungen werden nachfolgend an Hand von Zeichnungen näher erläutert.

Es zeigen:
- Figur 1: in schematischer Darstellung ein Ausführungsbeispiel eines Kommunikationssystems zur Durchführung des erfindungsgemäßen Verfahrens, bei dem der Übertragungsweg zwischen einem sendenden und einem empfangenden Kommunikationsgerät über mehrere verschiedene Kommunikationsnetze hinweg führt,
- Figur 2: in schematischer Darstellung eine beispielhafte Liste von verschiedenen Audioparametersätzen, die von einer Konfigurations- Netzwerkeinheit des Kommunikationssystems von Figur 1 für zugeordnete, verschiedene Übertragungswege zwischen dem sendenden und dem empfangenden Kommunikationsgerät vorgehalten wird, und
- Figur 3: in schematischer Darstellung beispielhaft die Einstellung von Audioparametern verschiedener Sprachsignal-Verarbeitungseinheiten und Sprachcodec- Einheiten des sendenden Kommunikationsgeräts durch die Konfigurations-Netzwerkeinheit des Kommunikationssystems von Figur 1.

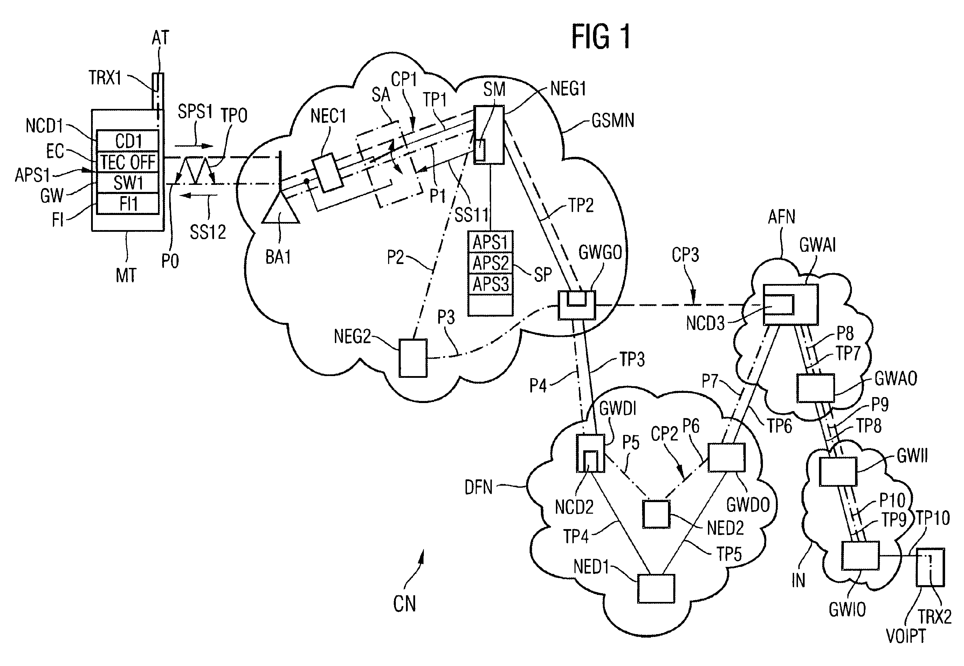

Elemente mit gleicher Funktion und Wirkungsweise sind in den Figuren 1 mit 3 jeweils mit denselben Bezugszeichen versehen.

Figur 1 zeigt in schematischer Darstellung ein beispielhaftes Kommunikationssystem CN. Dieses umfasst mehrere verschiedene Kommunikationsnetzwerke GSMN, DFN, AFN, IN nach unterschiedlichen Übertragungsstandards. Hier im Ausführungsbeispiel sind das im Einzelnen ein Mobilfunknetzwerk GSMN nach dem GSM (global system for mobile communications) Standard, ein digitales Festnetz DFN, ein analoges Festnetz AFN und ein lokales Inselnetz IN.

Zur Übertragung von Sprachsignalen SPS1 von einem Mobilfunkgerät MT als sendendes Kommunikationsgerät zu einem Festnetz- oder Internettelefon VOIPT als empfangendes Kommunikationsgerät wird von Netzwerkelementen der beteiligten Kommunikationsnetze GSMN, DFN, AFN, IN ein Übertragungsweg CP1 aufgebaut und durchgeschaltet.

Im Einzelnen umfasst dieser aktuell bereitgestellte Übertragungsweg bzw. Übertragungspfad CP1 den Sende-/Empfangszweig TRX1 des Mobilfunkgeräts MT zu und von dessen Antenne AT. Dieser Sende-/Empfangszweig TRX1 ist dabei in der Figur 1 der zeichnerischen Einfachheit halber lediglich stichpunktiert angedeutet. Im Sende-/Empfangszweig TRX1 werden die Sprachsignale mit Hilfe einer Sprachcodec- Einheit NCD1, d.h. Sprach-Encoder/Decoder, parametrisiert und codiert. Des Weiteren weist das Mobilfunkgerät MT eine eigene Echo-bzw. Nachhall -Unterdrückungseinheit und eine Rausch-Unterdrückungseinheit TEC auf, die auf die zu sendenden Sprachsignale im Sende-/Empfangszweig TRX1 einwirken. Darüber hinaus ist an den Sende-/Empfangszweig TRX1 zusätzlich eine sogenannte Pegelwaage PW angekoppelt, die Bestandteil der Freisprecheinrichtung des Mobilfunkgeräts MT ist. Sie dient dazu, akustische Rückkopplungen des jeweilig gesendeten Sprachsignals zurück zum Mobilfunkgerät MT zu unterdrücken. Ferner ist hier im Ausführungsbeispiel von Figur 1 in den Sende-/Empfangszweig TRX1 des Mobilfunkgeräts MT mindestens ein Filterelement FI eingefügt, mit dem sich weitere akustische Parameter des Mobilfunkgeräts MT wie z.B. die Tiefpasscharakteristik oder Hochpasscharakteristik des Sende-/Empfangszweigs TRX1 beeinflussen bzw. einstellen lassen.

Die zu übertragenden Sprachsignale SPS1 werden von der Antenne AT des Mobilfunkgeräts MT über deren Luftschnittstelle TPO an eine Basisstation BA1 gesendet, die für die momentane Aufenthaltsfunkzelle des Mobilfunkgeräts MT zuständig ist. Die Basisstation BA1 stellt die Ankopplung des Mobilfunkgeräts MT zu Netzwerkelementen des Mobilfunknetzwerks GSMN her. Das Mobilfunknetzwerk GSMN ist im vorliegenden Ausführungsbeispiel von Figur 1 vorzugsweise als GSM-Mobilfunknetzwerk ("global system for mobile communications") ausgebildet. Von der Vielzahl von Netzwerkkomponenten des Mobilfunknetzwerks GSMN ist lediglich diejenige Netzwerkeinheit NEG1 in der Figur 1 dargestellt, die den Verbindungsaufbau für den Übertragungsweg CP1 innerhalb des Mobilfunknetzwerks GSMN steuert und koordiniert. Alle übrigen Standardkomponenten sind in der Figur 1 der Übersichtlichkeit halber weggelassen worden. Dabei ist das Mobilfunknetzwerk GSMN mit seiner Vielzahl von Komponenten lediglich schematisiert durch eine wolkenähnliche Umrahmung angedeutet. Die Netzwerkeinheit NEG1 baut zwischen der Basisstation BA1 und sich einen Teilübertragungsweg TP1 auf. Weiterhin stellt sie über einen Teilübertragungsweg TP2 eine Übertragungsverbindung zu einer Schnittstelleneinheit bzw. einem sogenannten Gateway GWG0 her. Dieses Gateway GWG0 dient dazu, dass Mobilfunknetz GSMN mit einem zweiten Kommunikationsnetz DFN, das hier insbesondere als digitales Festnetz ausgebildet ist, zu verbinden. Dazu ist das ausgangsseitige Gateway GWG0 des Mobilfunknetzes GSMN mit dem eingangsseitigen Gateway GWDI des digitalen Festnetzes DFN über einen Teilübertragungsweg TP3 gekoppelt. Innerhalb des digitalen Festnetzes DFN steuert und kontrolliert eine übergeordnete Festnetzeinheit NED1 den Verbindungsaufbau des Übertragungswegs CP1. Im Einzelnen richtet die Netzwerkeinheit NED1 einen Teilpfad TP4 zwischen dem eingangsseitigen Gateway GWDI und sich ein. Sie ist über einen weiteren Teilpfad TP5 des Übertragungswegs CP1 an ein ausgangsseitiges Gateway GWDO geschlossen. Alle übrigen Netzwerkeinheiten des digitalen Festnetzes DFN sind in der Figur 1 der zeichnerischen Übersichtlichkeit halber ebenfalls weggelassen worden. Das ausgangsseitige Gateway GWD0 des digitalen Festnetzes DFN ist über einen Teilübertragungsweg TP6 mit dem eingangsseitigen Gateway bzw. Schnittstellenmodul GWAI des dritten beteiligten Kommunikationsnetzes AFN, das hier im Ausführungsbeispiel insbesondere als analoges Festnetz ausgebildet ist, verbunden. Dieses Gateway GWAI ist über einen Teilübertragungsweg TP7 mit einem ausgangsseitigen Gateway GWAO gekoppelt, dass über einen Teilpfad TP8 wiederum die Verbindung zum eingangsseitigen Gateway GWII eines lokalen Inselnetzes IN herstellt. Dieses eingangsseitige Gateway GWII ist über einen Teilpfad TP9 mit einem ausgangsseitigen Gateway bzw. Schnittstellenmodul GWIO verbunden, an dass das empfangende Kommunikationsgerät VOIPT über eine Leitung TP10 angeschlossen ist.

Die aneinander gekoppelten Teilübertragungsstrecken TP1 mit TP10 durch die verschiedenen beteiligten Kommunikationsnetze GSMN, DFN, AFN, IN hindurch können nunmehr ebenfalls mindestens ein Netzelement mit ein oder mehrere Sprachsignal-Verarbeitungseinheiten und/oder Sprachcodec-Einheiten aufweisen. Hier im Ausführungsbeispiel von Figur 1 ist beispielsweise in die Teilübertragungsstrecke TP1 des GSM-Mobilfunknetzes GSMN netzwerkseitig eine eigene Echo-Unterdrückungseinheit NEC1 als Netzelement eingefügt. Um die Sprachsignale, die durch die terminaleigene GSM-Codec-Einheit TEC parametrisiert sind, in Sprachsignale umzuwandeln, die mit dem ISDN-Codec codiert sind, weist das eingangsseitige Gateway GWDI des digitalen Festnetzes DFN eine ISDN-Sprachcodec- Einheit NCD2 zur Transcodierung bzw. Umwandlung auf. Für eine Umwandlung der mit dem digitalen ISDN-Sprachcodec der Sprachcodec-Einheit NCD2 beaufschlagten Sprachsignale in analoge Telefonsignale ist eine entsprechende Umwandlungscodec- Einheit NCD3 im eingangsseitigen Gateway GWAI des analogen Festnetzes AFN vorgesehen.

Zusammenfassend betrachtet können also im Teil-Übertragungspfad durch die mindestens zwei verschiedenen, beteiligten Kommunikationsnetze ein oder mehrere Sprachsignal-Verarbeitungseinheiten und/oder Sprachcodec-Einheiten vorhanden sein, die zusätzlich netzwerkseitig auf die zu übertragenden Sprachsignale einwirken. Zusätzlich dazu ist der Sende-/Empfangspfad TRX1 im sendenden Kommunikationsendgerät MT mit mindestens einer weiteren Sprachsignal-Verarbeitungseinheit und/oder Sprachcodec-Einheit beaufschlagt. Gleiches gilt entsprechend für den Sende-/Empfangszweig TRX2 des empfangenden Kommunikationsgeräts MT.

Aufgrund der Vielzahl von Sprachsignal-Verarbeitungseinheiten und/oder Sprachcodec- Einheiten entlang dem aktuell bereitgestellten Gesamtübertragungsweg CP1 können Konstellationen auftreten, bei denen es zu Beeinträchtigungen der Sprachqualität der zu übertragenden Sprachsignale kommen kann. Ein Beispiel dafür ist insbesondere der Fall, dass die Sprachsignale mit der terminaleigenen Echo-Unterdrückungseinheit TEC des sendenden Mobilfunkgeräts MT bearbeitet werden, bevor sie an das Mobilfunknetz GSMN übertragen werden, und dann noch einmal durch die Echo-Unterdrückungseinheit NEC1 gleicher Art im Teilstück TP1 im Mobilfunknetz GSMN verarbeitet werden. Dabei würden die Sprachsignale zweimal dieselbe oder ähnliche Echo-Unterdrückungsprozedur durchlaufen. Die Mehrfachbeaufschlagung mit im Wesentlich denselben Sprachsignal-Verarbeitungsprozeduren wird als sogenanntes "Tandeming" bezeichnet. Damit können Aufschaukeleffekte einhergehen, durch die die Sprachqualität der übertragenen Sprachsignale beeinträchtigt werden kann, obwohl jede Sprachsignal-Verarbeitungsprozedur und/oder jeder Sprachcodec für sich allein betrachtet weitgehend neutral wirkt oder normalerweise sogar eine Verbesserung der Sprachqualität mit sich bringt. Zusätzlich oder unabhängig hiervon kann auch die ein- oder mehrfache Transcodierung bzw. Umwandlung der Sprachsignale bzw. deren Sprachparameter von mindestens einem ersten Sprachcodec in mindestens einen zweiten Sprachcodec ggf. zu einer Verschlechterung der Sprachqualität der übermittelten Sprachsignale führen.

Um derartige unerwünschte Konstellationen mehrerer hintereinandergeschalteter Sprachverarbeitungseinheiten und/oder Sprachcodec- Einheiten zu vermeiden, wird nun für jeden möglichen Gesamtübertragungsweg zwischen zwei miteinander kommunizierenden Kommunikationsgeräten ein Satz von Audioparametern von entlang dem jeweiligen Gesamtübertragungsweg einwirkenden Sprachsignal-Verarbeitungseinheiten und/oder Sprachcodec- Einheiten vorab ermittelt, für den sich eine bestimmte gewünschte, d.h. einwandfreie Sprachsignalübertragung ergibt. Insbesondere enthält ein derart optimierter Audioparametersatz für den aktuell vorliegenden Gesamtübertragungsweg nur die Audioparameter von Konstellationen von einwirkenden SprachSignalverarbeitungseinheiten und/oder Sprachcodec- Einheiten, bei denen eine Mehrfachanwendung derselben oder ähnlichen Sprachsignal-Verarbeitungsprozedur und/oder Sprachcodec-Verarbeitung weitgehend vermieden ist. Jedem Gesamtübertragungsweg wird somit ein Audioparametersatz von Sprachsignal-Verarbeitungseinheiten und/oder Sprachcodec-Einheiten spezifisch zugeordnet, mit dem sich deren Audioparameter so konfigurieren lassen, dass eine ausreichende Sprachübertragungsqualität weitgehend eingehalten werden kann. Von einem derartig optimierten Audioparametersatz sind also Audioparameter von solchen Konstellationen von Sprachsignal-Verarbeitungseinheiten und/oder Sprachcodec- Einheiten ausgeschlossen, deren Kombinationswirkung zu einer Verschlechterung der ursprünglichen Sprachqualität führen würde. Auf diese Weise wird eine Tabelle oder Liste von Audioparametern für verschiedene Hintereinanderschaltungs- Konstellationen von Sprachsignal-Verarbeitungseinheiten und/oder Sprachcodec-Einheiten für verschiedene Übertragungswege ermittelt, die eine ausreichende Sprachqualität sicherstellen. Diese Tabelle mit einer Vielzahl von optimalen Audioparametersätzen, die in eindeutiger Weise spezifischen Übertragungswegen zugeordnet sind, wird dann vorzugsweise netzwerkseitig in einer Speichereinheit hinterlegt.

Hier im Ausführungsbeispiel von Figur 1 sind die Audioparametersätze für verschiedene Übertragungswege in einer Speichereinheit SP abgespeichert, die an die übergeordnete Netzwerkeinheit NEG1 angeschlossen ist. In die Tabelle der Speichereinheit SP sind beispielhaft drei verschiedene Audioparametersätze APS1, APS2, APS3 für drei zugeordnete unterschiedliche Übertragungswege CP1, CP2, CP3 abgelegt. Im Einzelnen ist also der erste Audioparametersatz APS1 dem Gesamtübertragungsweg CP1 zugeordnet. Der zweite Audioparametersatz CP2 ist für einen anderen Gesamtübertragungsweg CP2 vorgesehen, der in der Figur 1 strichpunktiert eingezeichnet ist. Dieser zweite Gesamtübertragungsweg CP2 verbindet das Mobilfunkgerät MT über die Luftübertragungsstrecke PO mit der Basisstation BA1, über die Teilstrecke P1 mit der übergeordneten Netzwerkeinheit NEG1 des GSM Funknetzwerkes GSMN, von dort über eine weitere Teiltrecke P2 mit einer weiteren übergeordneten Netzwerkeinheit NEG2, sowie über eine Teilstrecke P3 mit dem ausgangsseitigen Gateway GWG0 des Mobilfunknetzes GSMN. Daran schließt sich das Verbindungsstück P4 zwischen dem ausgangsseitigen Gateway GWGDO des Mobilfunknetzes GSMN und dem eingangsseitigen Gateway GWDI des digitalen Festnetzes DFN an. Das Gateway GWDI ist über einen Teilabschnitt P5 des Gesamtübertragungswegs CP2 mit einer von der ersten Netzwerkeinheit NED1 verschiedenen Netzwerkeinheit NED2 des digitalen Festnetzes DFN verbunden. Diese zweite Netzwerkeinheit NED2 ist über einen Übertragungspfad P6 mit dem ausgangsseitigen Gateway GWDO des digitalen Festnetzes DFN verbunden, das wiederum über den Verbindungspfad P7 mit dem eingangseitigen Gateway P7 des analogen Festnetzes AFN gekoppelt ist. Daran schließen sich in entsprechender Weise wie beim ersten Übertragungsweg CP1 das Teilstück P8 zwischen dem Gateway GWAI und dem ausgangsseitigen Gateway GWAO des analogen Festnetzes AFN, das Teilstück P9 zwischen dem Gateway GWA und dem eingangsseitigen Gateway GWII des Inselnetzes IN, sowie das Teilstück P10 zwischen dem eingangseitigen und dem ausgangsseitigen Gateway GWII, GWIO des Inselnetzes IN sowie schließlich die Anschlussleitung TP10 zum empfangsseitigen Kommunikationsgerät VOIPT an. Der Verlauf des zweiten Übertragungsweges CP2 ist somit vom ersten Übertragungsweg CP1 auf den Teilstrecken P5, P6 im digitalen Festnetz DFN verschieden, wobei eben andere Anforderungen an die Audioparameter der wirksam werdenden Sprachsignal- Verarbeitungseinheiten und/oder Sprachcodec-Einheiten als an die im ersten Übertragungsweg CP1 gestellt sind.

Dem dritten Audioparametersatz APS3 ist schließlich der dritte Übertragungsweg CP3 zugeordnet, der in der Figur 1 gestrichelt eingezeichnet ist. Er folgt im Wesentlichen dem Verlauf des ersten Übertragungswegs CP1 zwischen dem sendenden Mobilfunkgerät MT und dem Mobilfunknetz GSMN sowie auf der Teilstrecke zwischen dem analogen Festnetz AFN und dem empfangenden Mobilfunkgerät VOIPT nach. Jedoch führt dieser Übertragungsweg CP3 nicht über das digitale Festnetz DFN, sondern er verbindet direkt das ausgangsseitige Gateway GWG0 des Mobilfunknetzes GSMN mit dem eingangsseitigen Gateway GWAI des analogen Festnetzes AFN. Auf diese Weise führt der Übertragungsweg CP3 lediglich durch das GSM Mobilfunknetz GSMN, das analoge Festnetz AFN sowie das Inselnetz IN.

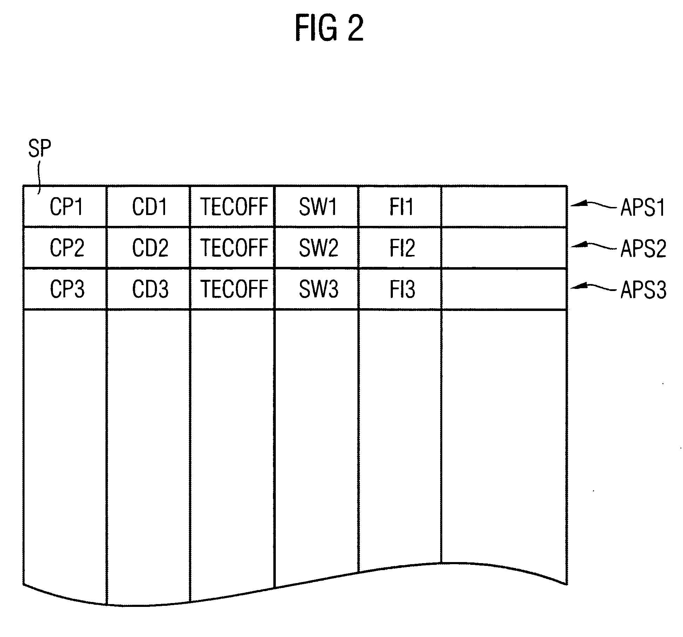

Figur 2 zeigt im Detail ein Beispiel für die in der Speichereinheit SP hinterlegten Audioparametersätze APS1, APS2, APS3, die eine Sprachübertragung mit ausreichender Sprachqualität spezifisch, d.h. individuell für die drei verschiedenen Übertragungswege ermöglichen. So enthält der erste Audioparametersatz APS1 beispielsweise als ersten Audioparameter für den Sprachcodec im sendenden Mobilfunkgerät MT den Typ CD1. Hier im Ausführungsbeispiel eines GSM-Mobilfunknetzes ist als Sprachcodec CD1 insbesondere ein GSM-Sprachcodec verwendet.

Der zweite Audioparameter des Audioparametersatzes APS1 ist ein Steuerparameter TECOFF, das den terminaleigenen Echo-Unterdrücker TEC des sendenden Mobilfunkgeräts MT ausschaltet. Dazu sendet die übergeordnete Netzwerkeinheit NEG1 mittels Steuermittel SM über die Teilstrecke TP1 an die Basisstation BA1 ein entsprechendes Steuersignal SS11, die wiederum über die Luftschnittstelle TP0 ein Steuersignal SS12 zum Ausschalten des Echo-Unterdrückers TEC im Sende-/Empfangszweig TRX1 des Mobilfunkgeräts MT schickt. Auf diese Weise verbleibt allein der netzwerkseitige Echo-Unterdrücker NEC1 in der Teilstrecke TP1 des Mobilfunknetzwerks GSMN und damit im insbesondere im Gesamtlaufweg CP1, so dass Aufschaukeleffekte durch mehrfache Echo-Unterdrückungen und damit etwaig einhergehende Beeinträchtigungen der Sprachqualität von vornherein weitgehend vermieden sind. In Abwandlung hierzu kann der erste Audioparametersatz dahingehend verändert werden, dass der Echo-Unterdrücker TEC des Mobilfunkgeräts MT eingeschalten bleibt, hingegen allein der Echo-Unterdrücker NEC1 im Mobilfunknetzwerk GSMN ausgeschalten wird. Dazu senden die Steuermittel SM der Konfigurations- Netzwerkeinheit NEG1 ein entsprechendes Steuersignal SS11 an einen Schalter SA im Teilpfad TP1, der den Echo-Unterdrücker NEC1 aus diesem auskoppelt bzw. abtrennt. Es kann also durch entsprechende Konfiguration der Audioparameter sichergestellt werden, dass entlang dem gesamten Übertragungsweg CP1 nur einmalig ein und derselben Echo-Unterdrücker wirksam werden kann.

Allgemein ausgedrückt werden durch die Konfigurations-Netzwerkeinheit die Audioparameter der entlang dem Übertragungsweg durchlaufenen Sprachsignal-Verarbeitungseinheiten zweckmäßigerweise derart konfiguriert, dass von ähnlichen oder gleichartig wirkenden Sprachsignal-Verarbeitungseinheiten lediglich eine einzige Sprachsignal-Verarbeitungseinheit aktiviert und alle übrigen Sprachsignal-Verarbeitungseinheiten gleicher oder ähnlicher Wirkungsart deaktiviert werden.

Dazu kann es insbesondere zweckmäßig sein, dass von der Konfigurations-Netzwerkeinheit wie z.B. NEG1 vor der Auswahl des zu konfigurierenden Audioparametersatzes wie z.B. APS1 Zustandsinformationen über die entlang dem aktuell bereitgestellten Übertragungsweg wie z.B. CP verwendeten ein oder mehreren Sprachsignal-Verarbeitungseinheiten wie z.B. TEC, PW, FI und/oder Sprachcodec- Einheiten wie z.B. NCD1, NCD2, NCD3 ermittelt und analysiert werden. Eine solche Zustandsinformation kann z.B. das Vorhandensein von mehreren Echo-Unterdrückern im Gesamtlaufweg sein. Aufgrund dieser Zustandsinformationen wird von der Konfigurations-Netzwerkeinheit NEG1 wie z.B. derjenige Audioparametersatz wie z.B. APS1 aus einer Vielzahl von für unterschiedliche Übertragungswege wie z.B. CP1, CP2, CP3 abgespeicherten Audioparametersätzen wie z.B. APS1, APS2, APS3 ausgewählt, der für den aktuell bereitgestellten Übertragungsweg wie z.B. CP1 eine höhere Sprachübertragungsqualität als die für die übrigen Übertragungswege wie z.B. CP2, CP3 abgespeicherten Audioparametersätze wie z.B. APS2, APS3 bewirkt.

Darüber hinaus legt der Audioparametersatz APS1 von Figur 2 Schwellwerte SW1 der Pegelwaage PW des Mobilfunkgeräts MT für Sende- und Empfangsrichtung fest.

Weiterhin enthält der Audioparametersatz APS1 als weiteren Audioparameter einen Audioparameter FI1 als Steuergröße zur Einstellung bzw. Konfiguration des Filters FI im Sende-/Empfangszweig TRX1 des Mobilfunkgeräts MT. Stellt die Netzwerkeinheit NEG1 beispielsweise zu Beginn oder während der Sprachübertragung fest, dass im Freisprechmodus des Mobilfunkgeräts MT störende Umgebungsgeräusche wie z.B. Motorgeräusche oder Lärm durch eine große Menschenmenge auftreten, so konfiguriert sie das Filter FI als Hochpass. Dadurch werden durch das Filter FI die üblicherweise tieffrequenten Umgebungsgeräusche von vornherein herausgefiltert. Allgemein ausgedrückt können auf diese Weise von der Netzwerkeinheit NEG1 in Abhängigkeit von der jeweiligen Umgebungs- und Sprechsituation am Ort des Mobilfunkgeräts MT verschiedene Filtercharakteristika im Sende-/Empfangspfad TRX1 des Mobilfunkgeräts MT eingestellt bzw. konfiguriert werden.

Zusätzlich oder unabhängig von diesen Parametern lassen sich selbstverständlich auch weitere akustische Parameter durch die Netzwerkeinheit NEG1 im sendenden Kommunikationsgerät einstellen bzw. steuern.

In entsprechender Weise kann aufgrund des abgespeicherten, optimalen Audioparametersatzes auch eine Konfiguration der Audioparameter von Sprachsignalverarbeitungseinheiten und/oder Sprachcodec- Einheiten im empfangenden Kommunikationsgerät durchgeführt werden. Zusätzlich oder unabhängig hiervon kann auf Basis des Audioparametersatzes, der für eine optimale Sprachqualität auf dem jeweiligen Übertragungsweg ermittelt worden ist, auch eine nachträgliche Konfiguration von ein oder mehreren Netzelementen entlang dem Gesamt-Übertragungsweg durch die beteiligten Kommunikationsnetze in analoger Weise durchgeführt werden.

Der zweite Audioparametersatz APS2 von Figur 2 bezieht sich auf den zweiten Übertragungsweg CP2, der durch das GSM Mobilfunknetz GSMN, das digitale Netz DFN sowie das analoge Festnetz AFN und das Inselnetz IN führt. Im Unterschied zum ersten Audioparametersatz APS1 sind aufgrund des veränderten Übertragungswegs über die Netzwerkeinheit NEG2 im Mobilfunknetz GSMN sowie die Netzwerkeinheit NED2 im digitalen Festnetz DFN andere Audioparameter SW2 für die Schwellwerte der Pegelwaage PW des Mobilfunkgeräts MT sowie des Filters FI im Sende-/Empfangspfad TRX1 des Mobilfunkgeräts MT vorgesehen. Im vorliegenden Ausführungsbeispiel wird von der Netzwerkeinheit NEG1 ermittelt, dass hochfrequente Umgebungsgeräusche am Standort des Mobilfunkgeräts MT vorhanden sind. Daraufhin signalisiert es über Steuersignale SS11, SS12 an das Mobilfunkgerät MT, im Sende-/Empfangspfad TRX1 das Filter FI mit einer Tiefpasscharakteristik zum Wegfiltern der Hochfrequenzgeräusche zu beaufschlagen. Dies wird im Audioparametersatz APS2 durch den Audioparameter FI2 repräsentiert, der vom Audioparameter FI1 des Audioparametersatzes APS1 verschieden ist. Alle übrigen Audioparameter im zweiten Audioparametersatz APS2 entsprechen denen des ersten Audioparametersatzes APS1. Insbesondere wird durch die Konfigurationsnetzwerkeinheit NEG1 mit Hilfe des Steuerparameters TECOFF der terminaleigene Echounterdrücker TEG des sendenden Mobilfunkgeräts MT ausgeschaltet, um in der Gesamtstrecke CP2 nur einen einzigen Echounterdrücker, nämlich den netzwerkseitigen Echounterdrücker NEC1 aktiv geschaltet, d.h. eingeschaltet zu haben.

Der dritte Audioparametersatz APS3 von Figur 2 bezieht sich auf den Fall, dass das Mobilfunknetz GSMN nun nicht wie bisher nach dem GSM-Standard, sondern nach dem UMTS-Standard ausgebildet ist. Der Audioparameter CD2 symbolisiert somit, dass von der Netzwerkeinheit NEG1 in der Sprachcodec- Einheit TEC im Mobilfunkgerät ein geeigneter UMTS-Sprachcodec aktiviert wird. Dazu sendet die Netzwerkeinheit NEG1 wiederum entsprechende Steuersignale SS11, SS12 über den dritten Übertragungsweg CP3 an das Mobilfunkgerät MT.

Da in der Übertragungsstrecke zwischen der Basisstation BA1 und der Konfigurations- Netzwerkeinheit NEG1 nach wie vor bereits netzwerksseitig ein Echo-Unterdrücker TEC1 zwischengeschaltet ist, wird mit Hilfe des Audioparameters TECOFF dem Mobilfunkgerät MT durch die Steuermittel SM der Netzwerkeinheit NEG1 wiederum signalisiert, dass der Mobilfunkgeräte-eigene Echo-Unterdrücker TEC ausgeschaltet wird. Weiterhin passt die Netzwerkeinheit NEG1 aufgrund von vorab bestimmten Analysen oder Messungen die Pegelwerte für die Pegelwaage PW der Freisprecheinrichtung des Mobilfunkgeräts MT mit Hilfe des Audioparameters SW3 an. Weitere akustische Einstellungen werden durch den Audioparameter FI3 für das Filter FI im Sende-/Empfangspfad TRX1 des Mobilfunkgeräts MT vorgenommen.

Zusammenfassend betrachtet wird also in mindestens einer Netzwerkeinheit, die einem oder mehreren beteiligten Kommunikationsnetzen zugeordnet ist, eine Vielzahl von Audioparametersätzen hinterlegt, die verschiedenen Übertragungswegen und Übertragungskonstellationen von beteiligten Sprachsignal- Verarbeitungseinheiten und/oder Sprachcodec-Einheiten in eindeutiger Weise, d.h. spezifisch zugeordnet sind und eine einwandfreie Sprachübertragung sicherstellen. Die übergeordnete Netzwerkeinheit fungiert dabei als Konfigurations-Netzwerkeinheit, die gemäß den vorgegebenen Audioparametern des für den jeweilig aktuell vorliegenden Übertragungsweg geltenden Audioparametersatzes entsprechende Einstellungen der Audioparameter von ein oder mehreren Sprachsignal-Verarbeitungseinheiten und/oder Sprachcodec- Einheiten des sendenden und/oder empfangenen Kommunikationsgeräts und/oder mindestens eines Netzelements der beteiligten Kommunikationsnetze vornimmt. Von der Konfigurations- Netzwerkeinheit werden also die Audioparameter des ausgewählten Audioparametersatzes direkt über den aktuell bereitgestellten Übertragungsweg an mindestens eine der Sprachsignal-Verarbeitungseinheiten und/oder Sprachcodec- Einheiten des sendenden und/oder empfangenden Kommunikationsgeräts und/oder an mindestens eines der im jeweilig beteiligten Kommunikationsnetz durchlaufenen Netzelemente übertragen. Erst auf diese Weise ist es stets möglich, auch bei der Zusammenschaltung von verschiedenartigen Kommunikationsnetzen nach unterschiedlichen Standards sowie beliebigen Kombinationen von ein- oder mehrfach hintereinandergeschalteten Sprachverarbeitungsprozeduren und/oder Sprachcodecs des sendenden und/oder empfangenden Kommunikationsgerät und/oder jeweilig beteiligter Netzelemente noch im nachhinein eine Korrektur dahingehend vorzunehmen, dass durch entsprechende Umkonfiguration der Audioparameter dieser beteiligten Sprachverarbeitungseinheiten und/oder Sprachcodec- Einheiten dennoch eine einwandfreie Sprachqualität erhalten bleibt. Dies bietet in vorteilhafter Weise einem Operator, d.h. Netzbetreiber, die Möglichkeit, Informationen über die auf dem aktuellen Übertragungsweg verwendete Sprachsignalverarbeitung, die z.B. durch Netzanforderungen, Codec, Echo-Unterdrückungsalgorithmen und Gerätefunktionen vorgegeben ist, einzuholen und dann entsprechend das sendende und/oder empfangende Kommunikationsgerät und/oder ein oder mehrere beteiligte Netzwerkelemente für die aktuelle Verbindung mit passenden Audioparametern zu konfigurieren.

Alternativ dazu kann es zweckmäßig sein, dass von der Konfigurations-Netzwerkeinheit an mindestens eine der Sprachsignal-Verarbeitungseinheiten und/oder Sprachcodec-Einheiten des sendenden und/oder empfangenden Kommunikationsgeräts und/oder an mindestens eines der im jeweilig beteiligten Kommunikationsnetz durchlaufenen Netzelemente mindestens ein Steuersignal übermittelt wird, mittels dem von den dort im jeweiligen Kommunikationsgerät oder Netzelement für unterschiedliche Übertragungswege abgespeicherten Audioparametersätzen der von der Konfigurations-Netzwerkeinheit spezifisch ausgewählte Audioparametersatz indirekt aktiviert wird.

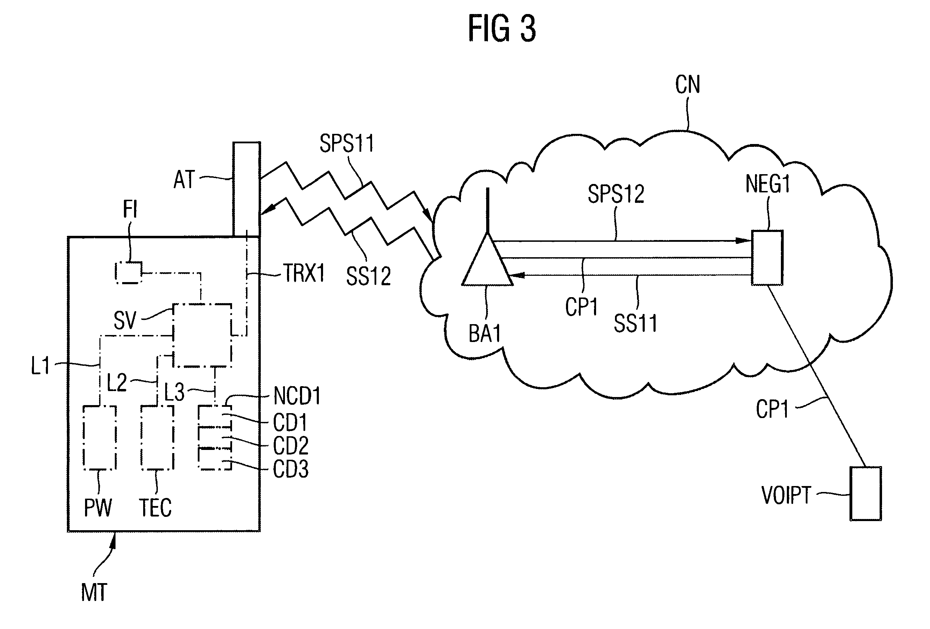

Die Figur 3 veranschaulicht nochmals exemplarisch verschiedene Konfigurationsmöglichkeiten speziell für das sendende Mobilfunkgerät MT von Figur 1. Die verschiedenen beteiligten Netzwerke auf dem Übertragungsweg CP1 zwischen dem sendenden Kommunikationsgerät MT und dem empfangenden Kommunikationsgerät VOIPT sind in der Figur 3 vereinfacht als gemeinsames Kommunikationsnetz CN dargestellt. Die Netzwerkeinheit NEG1 fungiert als Konfigurationsvorrichtung zur Einstellung geeigneter Audioparameter entlang dem Gesamt-Übertragungsweg CP1 bezüglich der dort verwendeten Sprachsignal-Verarbeitungseinheiten und/oder Sprachcodec-Einheiten im sendenden, im empfangenden Kommunikationsgerät und/oder im jeweilig beteiligten Netzelement. Hat der Bediener des Mobilfunkgeräts MT z.B. deren Freisprecheinrichtung aktiviert, so werden oftmals tieffrequente Umgebungsgeräusche wie z.B. Motorgeräusche oder der Lärm durch eine Menschenmenge mit über den Übertragungsweg CP1 übertragen. Wird dies von einem Netzelement wie z.B. der Konfigurations- Netzwerkeinheit NEG1 durch Analyse ermittelt, so kann sie entsprechende Gegenmaßnahmen einleiten, indem sie im geltenden Audioparametersatz für den Übertragungsweg CP1 die Steuergröße für das Filter FI im Sende-/Empfangspfad des Mobilfunkgeräts MT entsprechend ändert. Hat die Analyse der Konfigurations-Netzwerkeinheit NEG1 beispielsweise ergeben, dass tieffrequentes Rauschen auf dem Übertragungsweg CP1 vorkommt, so schaltet sie die Charakteristik des Filters FI im Sende-/Empfangspfad TRX1 des Mobilfunkgeräts so, dass dieses als Hochpass wirkt und somit störende tieffrequente Umgebungsgeräusche von herein herausfiltert und lediglich die eigentlichen Sprachsignale des Sprechers über den Übertragungsweg CP1 versendet. Zum Einstellen des Filters FI verschickt die Konfigurations-Netzwerkeinheit NEG1 über den Übertragungsweg CP1 zur Basisstation BA1 direkt entsprechende Steuersignale SS11, die wiederum Steuersignale SS12 über die Luftschnittstelle zum Mobilfunkgerät MT überträgt. Über dessen Antenne AT werden in den Sende-/Empfangszweig TRX1 diese Steuersignale an das Filter FI unter Zwischenschaltung einer Steuervorrichtung SV weitergeleitet.

Stellt die Konfigurations-Netzwerkeinheit NEG1 z.B. fest, dass entlang dem Übertragungsweg CP1 netzwerkseitig bereits ein oder mehrere weitere Echo-Unterdrückungseinheiten zusätzlich zur geräteeigenen Echo-Unterdrückungseinheit eingefügt sind, so kann sie entscheiden, mittels ihrer Steuermittel SM sendeseitig beim Mobilfunkgerät MT dessen Echo-Unterdrückungseinheit TEC durch Übermittelung entsprechender Steuersignale SS11, SS12 auszuschalten, um unerwünschte Aufschaukeleffekte oder Überlagerungseffekte, die zu einer etwaigen Beeinträchtigung der Sprachqualität führen könnten, weitgehend zu vermeiden. Die über die Antenne AT in den Sende-/Empfangspfad TRX1 eingehende Steuersignale werden dabei durch die zwischengeschaltete Steuervorrichtung SV über eine Steuerleitung L2 an die Echo-Unterdrückungseinheit TEC weitergeleitet.

Ergibt die Analyse durch die Konfigurations-Netzwerkeinheit NEG1 oder durch ein anderes Netzelement entlang dem Übertragungsweg CP1, dass ein bestimmter Sprachcodec im sendenden Kommunikationsgerät eine verbesserte Sprachqualität ergeben würde, so wird dieser durch Übermittlung entsprechender Steuersignale SS11, SS12 unter Zuhilfenahme der Steuereinrichtung SV im sendenden Kommunikationsgerät MT eingestellt. Die Sprachcodec- Einheit NCD1 im Mobilfunkgerät MT enthält drei verschiedene Sprachcodecs CD1, CD2, CD3 als verschiedene Typen zur Auswahl. Dies können beispielsweise ein GSM-Codec, ein UMTS-Codec sowie ein ISDN-Codec sein. Die Ansteuerung der Sprachcodec- Einheit NCD1 erfolgt dabei über eine Steuerleitung L3 von der Steuervorrichtung SV aus, die entsprechende Kontroll- bzw. Einstellsignale über die Luftschnittstelle von der netzwerkseitigen Konfigurations-Netzwerkeinheit NEG1 erhält.

Als weitere Audioparameter können die Schwellwerte der Pegelwaage PW der Freisprecheinrichtung des Mobilfunkgeräts MT mit Hilfe der Konfiguration-Netzwerkeinheit NEG1 an die jeweilig vorliegende Übertragungssituation durch Übermittlung entsprechender Steuersignale adaptiv angepasst werden. Die Pegelwaage PW ist dabei über eine Steuerleitung L1 mit der Steuervorrichtung SV des Mobilfunkgeräts MT verbunden, die die Steuersignale von der Konfigurations-Netzwerkeinheit empfängt.

In vorteilhafter Weise kann die Konfiguration der Audioparameter für den jeweilig vorliegenden Übertragungsweg beim Anmelden oder beim sogenannten Roaming des sendenden Kommunikationsgeräts vorgenommen werden. Selbstverständlich ist es auch möglich, beim Beginn oder während der eigentlichen Sprachübertragung adaptiv Einstellungen der Audioparameter mit Hilfe des Konfigurations-Netzwerkselements durchzuführen. Die erfindungsgemäße, adaptive Audioparametrisierung kann in vorteilhafter Weise für moderne Kommunikationsendgeräte bzw. Terminals in einer Vielzahl von unterschiedlichen Anwendungsumgebungen benutzt werden. Zum Beispiel dann, wenn ausgehend von einem mobilen GSM-Terminal Gespräche mit anderen GSM-, VoIP- Telefonen oder traditionellen Festnetzgeräten (analog oder ISDN) geführt werden. Die Übertragung der Kommunikationsdaten kann dabei über unterschiedliche Kommunikationsnetze und Netzstandards stattfinden. Diese Kommunikationsnetze benutzen dabei zum Teil unterschiedliche oder aber auch ähnliche oder gleiche Signalverarbeitungsalgorithmen und Sprachcodecs. Mit zunehmender Komplexität der Sprachsignalverarbeitung kann es dabei in der Praxis insbesondere vorkommen, dass ähnliche oder gleiche Signalverarbeitungsalgorithmen und/oder mehrere Sprachcodec- Transcodierungen zur Umsetzung der Sprachsignale in verschiedene Sprachcodecs von einem Sprachsignal mehrfach entlang seinem aktuell vorgegebenen Übertragungsweg durchlaufen werden. Ein Beispiel dafür ist der Fall, dass das Sprachsignal bereits mit einem terminaleigenen Echo-Unterdrückungsalgorithmus bearbeitet wird, bevor es an ein Funknetz übertragen wird, und dann dort nochmals mit einem ähnlichen Unterdrückungsalgorithmus im Verteilernetz eines Operators beaufschlagt wird. Dies wird mit dem Schlagwort des so genannten "Tandeming" bezeichnet. Dies kann zu großen Problemen wie z.B. Aufschaukeln und damit zu einer signifikanten Beeinträchtigung der Sprachqualität führen, obwohl jeder Algorithmus für sich selbst betrachtet eine Verbesserung der Qualität darstellt. Eine erste Abhilfemöglichkeit dafür ist, die Signalverarbeitungsalgorithmen nach Möglichkeit von vornherein so auszulegen, dass das unerwünschte Tandeming nicht zu zu starken Beeinträchtigungen bei der Sprachübertragung führt. Dazu werden zumeist an Hand von umfangreichen Feldtests ungünstige Aktionen ermittelt. Dann wird terminal- oder netzwerkseitig nachgebessert. Dies führt dazu, dass bei der Optimierung der Signalverarbeitungsalgorithmen Kompromisse zu Lasten der möglichen Sprachqualität eingegangen werden müssen und die dabei ermittelten Audioparameter ein für alle mal fest eingestellt sind.

Im Gegensatz dazu sieht das erfindungsgemäße Konfigurationsverfahren eine flexible, d.h. adaptive, jederzeit nachträglich mögliche Veränderung von Audioparametern entlang dem aktuellen Übertragungsweg angepasst an aktuelle Verbindungsbedingungen vor. Insbesondere kann das sendeseitig oder empfangsseitige Kommunikationsgerät bzw. Kommunikationsterminal für die aktuelle Verbindungsbedingung durch eine gezielte Parametrierung der Audiosignalverarbeitung mittels Signalisierung oder Parameterübertragung durch den jeweiligen Operator konfiguriert werden. Dadurch ist eine zentrale Anpassung einer Vielzahl von teilnehmenden Kommunikationsendgeräten zentralisiert ermöglicht. Da es bei der Übertragung von einem zum anderen Terminal ggf. erforderlich werden kann, dass ein so genanntes Transcoding, d.h. ein Wechsel von einem Sprachcodec-Typ auf einen anderen Sprachcodec- Typ wie z.B. von GSM-Codec auf ISDN-Codec stattfindet, ermittelt das jeweilig beteiligte Kommunikationsnetz die Anforderungen der Verbindungen und veranlasst entsprechende Schritte innerhalb der Netzarchitektur. Diese Codecinformationen und weitere Informationen über die im Netz verwendete Sprachsignalverarbeitung sowie über die Sprachsignalverarbeitung und Sprachcodecs der beteiligten sendeseitigen und empfangsseitigen Terminals wird von mindestens einem Netzwerkelement eingeholt und auf Basis dieser Information das sendeseitige, das empfangsseitige Terminal und/oder beteiligte Netzelemente in einen Betriebsmodus hinsichtlich ihrer Audioparameter versetzt, die unter den gegebenen Übertragungsbedingungen eine optimierte Signalverarbeitung weitgehend sicherstellen. Auch unabhängig von der konkreten Verbindungssituation können darüber hinaus akustische Parameter wie zum Beispiel die Filtercharakteristik des Endgeräts im Sende-/und Empfangspfad vom Operator oder zumindest abhängig von Operator angepasst werden. Dadurch ist es ermöglicht, für verschiedene Operatoren bzw. Netzwerkbetreiber verschiedene Audioparametersätze in die jeweilig beteiligten Kommunikationsendgeräte ohne großen Aufwand zentral durch eine Netzwerkeinheit einzuspeisen. Auch netzwerkseitig ist eine flexible Änderung der Audioparameter in ein oder mehreren beteiligten Netzelementen ermöglicht.

Möchten wie im Ausführungsbeispiel von Figur 1 die Benutzer des GSM- Mobiltelefons MT und eines VoIP ("voice over Internet Protocol")-Terminals VOIPT ein Gespräch führen, so wählt der Benutzer des GSM-Mobiltelefons MT die entsprechende Telefonnummer des anderen Anschlusses. Diese Daten werden an das Übertragungsnetz GSMN des zuständigen Operators gesendet. Um die Verbindung aufzubauen, durchläuft ein Signalisierungssignal einen der möglichen Übertragungswege und stellt dabei fest, dass das VoIP-Terminal VOIPT in einem Inselnetz IN angeschlossen ist, welches über das Mobilfunknetz GSMN, ein digitales Festnetz DFN und ein analoges Festnetz AFN erreichbar ist. Auf diesem Übertragungsweg werden unterschiedliche Codecs wie zum Beispiel NCD1, NCD2, NCD3 und sowohl ein terminalseitiger Echo-Unterdrückungsalgorithmus TEC als auch ein netzwerkseitiger Echo-Unterdrückungsalgorithmus NEC1 durchlaufen. Darüber hinaus liegen Daten vor, dass sich das GSM-Mobilfunkgerät in einem sehr guten Empfangsgebiet befindet. Am Endgerät MT lassen sich durch Fernkonfigurierung des Operators mit Hilfe des Konfigurations-Netzwerkelements NEG1 Audioparameter der terminaleigenen Signalverarbeitung einstellen. Der Operator verwaltet vorzugsweise eine Datenbank, wo zu jedem Gerätetyp eine Auswahl an Audioparametersätzen für unterschiedliche Anwendungsszenarien - wie zum Beispiel Übertragungswege rein über ein GSM Netz, über ein GSM-Netz und ein daran angekoppeltes digitales Festnetz, über ein GSM-Netz und ein daran angekoppeltes UMTS Mobilfunknetz, usw. - abgelegt ist. Um ein ungünstiges Tandeming zu vermeiden, sendet nun der Operator einen gewünschten Audioparametersatz, welcher für die Übertragungsweise optimiert ist, an das sende- oder empfangsseitige Kommunikationsgerät. Als Konsequenz wird z.B. der terminalinterne Echo-Unterdrücker im Mobilfunkgerät MT ausgeschaltet und der optimale Codec ausgewählt. In der nun folgenden Verbindung der beiden Gesprächspartner wird dadurch eine für die Verbindung optimierte Sprachqualität erzielt. Auf diese Weise ist selbst bei Übertragungswegen über unterschiedliche Übertragungsnetze eine optimierte Sprachübertragung ermöglicht. Durch die gezielte Konfigurierung von Audiosignalparametern kann insbesondere Tandeming vermieden werden.

Das statische Vorhalten von unterschiedlichen Audioparametersätzen für jeden Operator im jeweiligen Kommunikationsendgerät kann in vorteilhafter Weise entfallen. Denn bisher wird ein Mobilfunkgerät bei der Herstellung mit Operator-, d.h. Netzbetreiber-spezifischen Audioparametersätzen ausgestattet, welche den Anforderungen und Wünschen des jeweiligen Operators entsprechen. So fordern zum Beispiel unterschiedliche Netzbetreiber unterschiedliche Parameter für die Filter, mit denen der Frequenzgang des zu sendenden und empfangenen Sprachsignals verändert wird. Dies erfordert für den Hersteller des Mobilfunkgeräts Mehraufwand, da das Gerät für unterschiedliche Netzbetreiber unterschiedlich parametriert werden muss. Mit Hilfe des vorliegenden erfindungsgemäßen Konfigurationsverfahrens ist es dem Operator hingegen ermöglicht, das jeweilige Mobilfunkgerät seinen Vorstellungen entsprechend durch Senden von für den aktuell gegebenen Übertragungsweg angepassten Audioparametern über das Netz an das Mobilfunkgerät optimal zu konfigurieren, was dem Hersteller eine Reduzierung des Aufwands in der Produktion und dem Netzbetreiber eine erhöhte Flexibilität bietet.

## Patentansprüche

1. Verfahren zur Übertragung von Sprachsignalen (SPS1) zwischen einem sendenden Kommunikationsgerät (MT) und einem empfangenden Kommunikationsgerät (VOIPT) über einen Übertragungsweg (CP1) durch ein oder mehrere Kommunikationsnetze (GSMN, DFN, AFN, IN) hinweg, wobei von den Sprachsignalen (SPS1) auf ihrem Übertragungsweg (CP1) insgesamt eine Vielzahl von Sprachsignal-Verarbeitungseinheiten (TEC, NEC1) und/oder Sprachcodec-Einheiten (NCD1, NCD2, NCD3) durchlaufen wird,
**dadurch gekennzeichnet,**
**dass** für den vom jeweilig beteiligten Kommunikationsnetz (GSM, DFN, AFN, IN) aktuell bereitgestellten Übertragungsweg (CP1) durch mindestens eine Konfigurations-Netzwerkeinheit (NEG1) derjenige Audioparametersatz (APS1) aus einer Vielzahl von für unterschiedliche Übertragungswege (CP1, CP2, CP3) abgespeicherten Audioparametersätzen (APS1, APS2, APS3) ausgewählt wird, der für den aktuell bereitgestellten Übertragungsweg (CP1) eine höhere Sprachübertragungsqualität als die für die übrigen Übertragungswege (CP2, CP3) abgespeicherten Audioparametersätze (APS2, APS3) bewirkt, und dass von der Konfigurations-Netzwerkeinheit (NEG1) mit Hilfe dieses ausgewählten Audioparametersatzes (APS1) mindestens eine der durchlaufenen Sprachsignal-Verarbeitungseinheiten (TEC, PW, FI) und/oder Sprachcodec - Einheiten (NCD1, NCD2, NCD3) des sendenden und/oder empfangenden Kommunikationsendgeräts (MT, VOIPT) und/oder mindestens eines der im jeweilig beteiligten Kommunikationsnetz (GSM, DFN, AFN, IN) durchlaufenen Netzelemente (NEC1) für die Übertragung der Sprachsignale (SPS1) über den aktuellen Übertragungsweg (CP1) konfiguriert wird.

2. Verfahren nach Anspruch 1,
**dadurch gekennzeichnet,**
**dass** von der Konfigurations- Netzwerkeinheit (NEG1) die Audioparameter (CD1, TECOFF, SW1, FI1) des ausgewählten Audioparametersatzes (APS1) direkt über den aktuell bereitgestellten Übertragungsweg (CP1) an mindestens eine der Sprachsignal-Verarbeitungseinheiten (TEC, PW, FI) und/oder Sprachcodec- Einheiten (NCD1) des sendenden und/oder empfangenden Kommunikationsgeräts (MT, VOIPT) und/oder an mindestens eines der im jeweilig beteiligten Kommunikationsnetz (GSM, DFN, AFN, IN) durchlaufenen Netzelemente (NEC1) übertragen werden.

3. Verfahren nach Anspruch 1,
**dadurch gekennzeichnet,**
**dass** von der Konfigurations-Netzwerkeinheit (NEG1) an mindestens eine der Sprachsignal-Verarbeitungseinheiten (TEC, PW, FI) und/oder Sprachcodec- Einheiten (NCD1) des sendenden und/oder empfangenden Kommunikationsgeräts (MT, VOIPT) und/oder an mindestens eines der im jeweilig beteiligten Kommunikationsnetz (GSM, DFN, AFN, IN) durchlaufenen Netzelemente (NEC1) mindestens ein Steuersignal (SS11, SS12) übermittelt wird, mittels dem von den dort für unterschiedliche Übertragungswege (CP1, CP2, CP3) abgespeicherten Audioparametersätzen (APS1, APS2, APS3) der von der Konfigurations-Netzwerkeinheit (NEG1) ausgewählte Audioparametersatz (APS1) indirekt aktiviert wird.

4. Verfahren nach einem der vorhergehenden Ansprüche, **dadurch gekennzeichnet,**
**dass** durch die Konfigurations-Netzwerkeinheit (NEG1) die Audioparameter (TECOFF, SW1, FI1, CD1) der entlang dem Übertragungsweg (CP1) durchlaufenen Sprachsignal-Verarbeitungseinheiten (TEC, NEC1) derart konfiguriert werden, dass von ähnlichen oder gleichartig wirkenden Sprachsignal- Verarbeitungseinheiten (TEC, NEC1) lediglich eine einzige Sprachsignal- Verarbeitungseinheit (NEC1) aktiviert und alle übrigen Sprachsignal-Verarbeitungseinheiten (TEC) gleicher oder ähnlicher Wirkungsart deaktiviert werden.

5. Verfahren nach einem der vorhergehenden Ansprüche, **dadurch gekennzeichnet,**
**dass** von der Konfigurations-Netzwerkeinheit (NEG1) vor der Auswahl des zu konfigurierenden Audioparametersatzes (APS1) Zustandsinformationen über die entlang dem aktuell bereitgestellten Übertragungsweg (CP1) verwendeten ein oder mehreren Sprachsignal-Verarbeitungseinheiten (TEC, PW, FI) und/oder Sprachcodec- Einheiten (NCD1, NCD2, NCD3) ermittelt und analysiert werden, und dass aufgrund dieser Zustandsinformationen von der Konfigurations-Netzwerkeinheit (NEG1) derjenige Audioparametersatz (APS1) aus einer Vielzahl von für unterschiedliche Übertragungswege (CP1, CP2, CP3) abgespeicherten Audioparametersätzen (APS1, APS2, APS3) ausgewählt wird, der für den aktuell bereitgestellten Übertragungsweg (CP1) eine höhere Sprachübertragungsqualität als die für die übrigen Übertragungswege (CP2, CP3) abgespeicherten Audioparametersätze (APS2, APS3) bewirkt.

6. Verfahren nach einem der vorhergehenden Ansprüche, **dadurch gekennzeichnet,**
**dass** durch die Konfigurations-Netzwerkeinheit (NEG1) mit Hilfe des ausgewählten Audioparametersatzes (APS1) als Audioparameter durchlaufener Sprachsignal-Verarbeitungseinheiten die ein oder mehreren Schwellwerte (SW1) der Signalpegelwaage (PW) der Freisprecheinrichtung, das Ein- und/oder Ausschalten der Echo-Unterdrückungseinheit (TEC), und/oder das Einstellen von ein oder mehreren Sprachsignalfiltern (FI) im Sende- und/oder Empfangspfad (TRX1) des sendenden und/oder empfangenden Kommunikationsgeräts (MT, VOIPT) und/oder mindestens eines Netzelements im aktuell bereitgestellten Übertragungsweg (CP1) konfiguriert werden.

7. Verfahren nach einem der vorhergehenden Ansprüche, **dadurch gekennzeichnet,**
**dass** der Übertragungsweg (CP1) durch mindestens zwei verschiedene Kommunikationsnetze (GSMN, DFN) hindurch geschaltet wird.

8. Verfahren nach Anspruch 7,
**dadurch gekennzeichnet,**
**dass** der aktuell bereitgestellte Übertragungsweg (CP1) durch mindestens ein Mobilfunknetz (GSMN) und mindestens ein Festnetz (DFN) hindurch geschaltet wird.

9. Verfahren nach einem der vorhergehenden Ansprüche, **dadurch gekennzeichnet,**
**dass** als sendendes und/oder empfangendes Kommunikationsgerät ein Mobilfunkgerät (MT), ein Schnurlostelefon, ein Festnetztelefongerät oder Internet- Telefongerät (VOIPT) verwendet wird.

10. Verfahren nach einem der vorhergehenden Ansprüche, **dadurch gekennzeichnet,**
**dass** durch die Konfigurations-Netzwerkeinheit (NEG1) die Konfiguration der Audioparameter des sendenden und/oder empfangenden Kommunikationsgeräts (MT, VOIPT) und/oder des mindestens einen im aktuell bereitgestellten Übertragungsweg (CP1) durchlaufenen Netzelements (NEC1) aufgrund des ausgewählten Audioparametersatzes (APS1) beim Anmelden oder Roaming des jeweilig beteiligten Kommunikationsgerätes (MT, VOIPT) durchgeführt wird.

11. Kommunikationssystem zur Übertragung von Sprachsignalen (SPS1) zwischen einem sendenden Kommunikationsgerät (MT) und einem empfangenden Kommunikationsgerät (VOIPT) über einen Übertragungsweg (CP1) durch ein oder mehrere Kommunikationsnetze (GSMN, DFN, AFN, IN) hinweg, wobei in den Übertragungsweg (CP1) insgesamt eine Vielzahl von Sprachsignal-Verarbeitungseinheiten (TEC, NEC1) und/oder Sprachcodec-Einheiten (NCD1, NCD2, NCD3) eingefügt sind, insbesondere nach einem der vorhergehenden Ansprüche, **dadurch gekennzeichnet,**
**dass** mindestens eine Konfigurations- Netzwerkeinheit (NEG1) zur Auswahl desjenigen Audioparametersatzes (APS1) aus einer Vielzahl von für unterschiedliche Übertragungswege (CP1, CP2, CP3) abgespeicherten Audioparametersätzen (APS1, APS2, APS3) vorgesehen ist, der für den aktuell bereitgestellten Übertragungsweg (CP1) eine höhere Sprachübertragungsqualität als die für die übrigen Übertragungswege (CP2, CP3) abgespeicherten Audioparametersätze (APS2, APS3) bewirkt, und dass die Konfigurations- Netzwerkeinheit (NEG1) Steuermittel (SM) zum Konfigurieren mindestens eine der durchlaufenen Sprachsignal- Verarbeitungseinheiten (TEC, PW, FI) und/oder Sprachcodec- Einheiten (NCD1) des sendenden und/oder empfangenden Kommunikationsgeräts (MT, VOIPT) und/oder mindestens eines der im jeweilig beteiligten Kommunikationsnetz (GSM, DFN, AFN, IN) durchlaufenen Netzelemente (NEC1) für die Übertragung der Sprachsignale (SPS1) über den aktuellen Übertragungsweg (CP1) aufweist.

12. Konfigurations- Netzwerkselement (NEG1) mit Steuermitteln (SM) zur Durchführung des Verfahrens nach einem der vorhergehenden Ansprüche 1 mit 10.

## Claims

1. Method for transmitting speech signals (SPS1) between a transmitting communication device (MT) and a receiving communication device (VOIPT) via a transmission path (CP1) through one or more communication networks (GSMN, DFN, AFN, IN), wherein a plurality of speech signal processing units (TEC, NEC1) and/or speech codec units (NCD1, NCD2, NCD3) is passed through overall by the speech signal (SPS1) on its transmission path (CP1),
**characterised in that**
for the transmission path (CP1) currently provided by the respectively participating communication network (GSM, DFN, AFN, IN), the audio parameter set (APS1) which effects a higher speech transmission quality for the currently provided transmission path (CP1) than the audio parameter sets (APS2, APS3) stored for the remaining transmission paths (CP2, CP3), is selected by at least one configuration network unit (NEG1) from a plurality of audio parameter sets (APS1, APS2, APS3) stored for different transmission paths (CP1, CP2, CP3), and that at least one of the speech signal processing units (TEC, PW, FI) passed through by the configuration network unit (NEG1) with the aid of this selected audio parameter set (APS1) and/or speech codec units (NCD1, NCD2, NCD3) of the transmitting and/or receiving communication terminal (MT, VOIPT) and/or at least one of the network elements (NEC1) passed through in the respectively participating communication network (GSM, DFN, AFN, IN) is configured for the transmission of speech signals (SPS1) via the current transmission path (CP1) by the configuration network unit (NEG1) with the aid of this selected audio parameter set (APS1).

2. Method according to claim 1,
**characterised in that**
the configuration network unit (NEG1) transmits the audio parameters (CD1, TECOFF, SW1, FI1) of the selected audio parameter set (APS1) directly via the currently provided transmission path (CP1) to at least one of the speech signal processing units (TEC, PW, FI) and/or speech codec units (NCD1) of the transmitting and/or receiving communication device (MT, VOIPT) and/or to at least one of the network elements (NEC1) passed through in the respectively participating communication network (GSM, DFN, AFN, IN).

3. Method according to claim 1,
**characterised in that**
the configuration network unit (NEG1) transmits at least one control signal (SS11, SS12) to at least one of the speech signal processing units (TEC, PW, FI) and/or speech codec units (NCD1) of the transmitting and/or receiving communication device (MT, VOIPT) and/or to at least one of the network elements (NEC1) passed through in the respectively participating communication network (GSM, DFN, AFN, IN), by means of which control signal (SS11, SS12) the audio parameter set (APS1) selected by the configuration network unit (NEG1) is indirectly activated by the audio parameter sets (APS1, APS2, APS3) stored there for different transmission paths (CP1, CP2, CP3).

4. Method according to one of the preceding claims, **characterised in that**
the configuration network unit (NEG1) configures the audio parameters (TECOFF, SW1, FI1, CD1) of the speech signal processing units (TEC, NEC1) passed through along the transmission path (CP1) such that only a single speech signal processing unit (NEC1) of similarly or identically operating speech signal processing units (TEC, NEC1) is activated and all remaining speech signal processing units (TEC) of the same or similar mode of operation are deactivated.

5. Method according to one of the preceding claims, **characterised in that**,
prior to selecting the audio parameter set (APS1) to be configured, the configuration network unit (NEG1) determines and analyses status information relating to the one or more speech signal processing units (TEC, PW, FI) and/or speech codec units (NCD1, NCD2, NCD3) used along the currently provided transmission path (CP1) and, that on account of this status information, the configuration network unit (NEG1) selects the audio parameter set (APS1) which effects a higher speech transmission quality for the currently provided transmission path (CP1) than the audio parameter sets (APS2, APS3) stored for the remaining transmission paths (CP2, CP3) from a plurality of audio parameter sets (APS1, APS2, APS3) stored for different transmission paths (CP1, CP2, CP3).

6. Method according to one of the preceding claims, **characterised in that**,
with the aid of the selected audio parameter set (APS1) as audio parameters of passed through speech signal processing units, the configuration network unit (NEG1) configures the one or more threshold values (SE1) of the signal level scale (PW) of the handsfree set, the switching on/off of the echo suppression unit (TEC), and/or the setting of one or more speech signal filters (FI) in the transmit and/or receive path (TRX1) of the transmitting and/or receiving communication device (MT, VOIPT) and/or at least one network element in the currently provided transmission path (CP1).

7. Method according to one of the preceding claims, **characterised in that**
the transmission path (CP1) is connected through at least two different communication networks (GSMN, DFN).

8. Method according to claim 7,
**characterised in that**
the currently provided transmission path (CP1) is connected through at least one mobile radio network (GSMN) and at least one fixed network (DFN).

9. Method according to one of the preceding claims, **characterised in that**
a mobile radio device (MT), a wireless telephone, a fixed network telephone device or Internet telephone device (VOIPT) is used as a transmitting and/or receiving communication device.

10. Method according to one of the preceding claims, **characterised in that**,
on account of the selected audio parameter set (APS1) when registering or roaming the respectively participating communication device (MT, VOIPT), the configuration network unit (NEG1) implements the configuration of the audio parameters of the transmitting and/or receiving communication device (MT, VOIPT) and/or of the at least one network element (NEC1) passed through in the currently provided transmission path (CP1).

11. Communication system for transmitting speech signals (SPS1) between a transmitting communication device (MT) and a receiving communication device (VOIPT) via a transmission path (CP1) through one or more communication networks (GSMN, DNF, AFN, IN), wherein a plurality of speech signal processing units (TEC, NEC1) and/or speech codec units (NCD1, NCD2, NCD3) are added overall into the transmission path (CP1), in particular according to one of the preceding claims,
**characterised in that**
at least one configuration network unit (NEG1) is provided to select the audio parameter set (APS1) which effects a higher speech transmission quality for the currently provided transmission path (CP1) than the audio parameter sets (APS2, APS3) stored for the remaining transmission paths (CP2, CP3), from a plurality of audio parameter sets (APS1, APS2, APS3) stored for different transmission paths (CP1, CP2, CP3), and that the configuration network unit (NEG1) comprises control means (SM) for configuring at least one of the passed through speech signal processing units (TEC, PW, FI) and/or speech codec units (NCD1) of the transmitting and/or receiving communication device (MT, VOIPT) and/or at least one of the network elements (NEC1) passed through in the respectively participating communication network (GSM, DFN, AFN, IN) for the transmission of speech signals (SPS1) via the current transmission path (CP1).

12. Configuration network element (NEG1) having control means (SM) for implementing the method according to one of the preceding claims 1 to 10.

## Revendications

1. Procédé de transmission de signaux vocaux (SPS1) entre un appareil de communication émetteur (MT) et un appareil de communication récepteur (VOIPT) sur un chemin de transmission (CP1) passant par un ou plusieurs réseaux de communication (GSMN, DFN, AFN, IN), les signaux vocaux (SPS1) traversant au total, sur leur chemin de transmission (CP1), une pluralité d'unités de traitement de signaux vocaux (TEC, NEC1) et/ou d'unités de codec vocal (NCD1, NCD2, NCD3), **caractérisé en ce qu'**au moins une unité de réseau de configuration (NEG1) sélectionne, pour le chemin de transmission (CP1) actuellement mis à disposition par le réseau de communication respectivement impliqué (GSM, DFN, AFN, IN), parmi une pluralité de jeux de paramètres audio (APS1, APS2, APS3) stockés pour différents chemins de transmission (CP1, CP2, CP3), le jeu de paramètres audio (APS1) qui donne, pour le chemin de transmission (CP1) actuellement mis à disposition, une qualité de transmission vocale plus élevée que les jeux de paramètres audio (APS2, APS3) stockés pour les autres chemins de transmission (CP2, CP3) et **en ce que** l'unité de réseau de configuration (NEG1) configure, à l'aide de ce jeu de paramètres audio sélectionné (APS1), pour la transmission des signaux vocaux (SPS1) sur le chemin de transmission actuel (CP1), au moins l'une des unités de traitement de signaux vocaux traversées (TEC, PW, FI) et/ou des unités de codec vocal (NCD1, NCD2, NCD3) du terminal de communication émetteur et/ou récepteur (MT, VOIPT) et/ou au moins l'un des éléments de réseau (NEC1) traversés dans le réseau de communication (GSM, DFN, AFN, IN) respectivement impliqué.

2. Procédé selon la revendication 1, **caractérisé en ce que** l'unité de réseau de configuration (NEG1) transmet les paramètres audio (CD1, TECOFF, SW1, FI1) du jeu de paramètres audio sélectionné (APS1) directement sur le chemin de transmission actuellement mis à disposition (CP1) à au moins l'une des unités de traitement de signaux vocaux (TEC, PW, FI) et/ou des unités de codec vocal (NCD1) de l'appareil de communication émetteur et/ou récepteur (MT, VOIPT) et/ou à au moins l'un des éléments de réseau (NEC1) traversés dans le réseau de communication (GSM, DFN, AFN, IN) respectivement impliqué.

3. Procédé selon la revendication 1, **caractérisé en ce que** l'unité de réseau de configuration (NEG1) transmet à au moins l'une des unités de traitement de signaux vocaux (TEC, PW, FI) et/ou des unités de codec vocal (NCD1) de l'appareil de communication émetteur et/ou récepteur (MT, VOIPT) et/ou à au moins l'un des éléments de réseau (NEC1) traversés dans le réseau de communication (GSM, DFN, AFN, IN) respectivement impliqué au moins un signal de commande (SS11, SS12) au moyen duquel est indirectement activé, parmi les jeux de paramètres audio (APS1, APS2, APS3) qui y sont stockés pour différents chemins de transmission (CP1, CP2, CP3), le jeu de paramètres audio (APS1) sélectionné par l'unité de réseau de configuration (NEG1).

4. Procédé selon l'une des revendications précédentes, **caractérisé en ce que** l'unité de réseau de configuration (NEG1) configure les paramètres audio (TECOFF, SW1, FI1, CD1) des unités de traitement de signaux vocaux (TEC, NEC1) traversées le long du chemin de transmission (CP1) de manière telle que, parmi des unités de traitement de signaux vocaux (TEC, NEC1) similaires ou à action similaire, une seule unité de traitement de signaux vocaux (NEC1) est activée et toutes les autres unités de traitement de signaux vocaux (TEC) dont le mode d'action est identique ou similaire sont désactivées.

5. Procédé selon l'une des revendications précédentes, **caractérisé en ce que** l'unité de réseau de configuration (NEG1), avant la sélection du jeu de paramètres audio (APS1) à configurer, détecte et analyse des informations d'état sur l'une ou les plusieurs unités de traitement de signaux vocaux (TEC, PW, FI) et/ou unités de codec vocal (NCD1, NCD2, NCD3) utilisées le long du chemin de transmission (CP1) actuellement mis à disposition et **en ce que** l'unité de réseau de configuration (NEG1), sur la base de ces informations d'état, sélectionne, parmi une pluralité de jeux de paramètres audio (APS1, APS2, APS3) stockés pour différents chemins de transmission (CP1, CP2, CP3), le jeu de paramètres audio (APS1) qui donne, pour le chemin de transmission (CP1) actuellement mis à disposition, une qualité de transmission vocale plus élevée que les jeux de paramètres audio (APS2, APS3) stockés pour les autres chemins de transmission (CP2, CP3).

6. Procédé selon l'une des revendications précédentes, **caractérisé en ce que** l'unité de réseau de configuration (NEG1) configure, à l'aide du jeu de paramètres audio sélectionné (APS1), en tant que paramètres audio d'unités de traitement de signaux vocaux traversés, l'une ou les plusieurs valeurs seuils (SW1) de l'équilibreur de niveau de signal (PW) du dispositif main libre, la mise en marche et/ou la coupure de l'unité de suppression d'écho (TEC) et/ou le réglage d'un ou de plusieurs filtres de signaux vocaux (FI) dans le chemin d'émission et/ou de réception (TRX1) de l'appareil de communication émetteur et/ou récepteur (MT, VOIPT) et/ou au moins d'un élément de réseau dans le chemin de transmission (CP1) actuellement mis à disposition.

7. Procédé selon l'une des revendications précédentes, **caractérisé en ce que** le chemin de transmission (CP1) est commuté de manière à passer par au moins deux réseaux de communication différents (GSMN, DFN).

8. Procédé selon la revendication 7, **caractérisé en ce que** le chemin de transmission (CP1) actuellement mis à disposition est commuté de manière à passer par au moins un réseau de radiotéléphonie mobile (GMSN) et au moins un réseau fixe (DFN).

9. Procédé selon l'une des revendications précédentes, **caractérisé en ce qu'**est utilisé, en tant qu'appareil de communication émetteur et/ou récepteur, un appareil de radiotéléphonie mobile (MT), un téléphone sans fil, un appareil téléphonique sur réseau fixe ou un appareil téléphonique internet (VOIPT).

10. Procédé selon l'une des revendications précédentes, **caractérisé en ce que** l'unité de réseau de configuration (NEG1) effectue la configuration des paramètres audio de l'appareil de communication émetteur et/ou récepteur (MT, VOIPT) et/ou de l'au moins un élément de réseau (NEC1) traversé dans le chemin de transmission (CP1) actuellement mis à disposition sur la base du jeu de paramètres audio sélectionné (APS1) lors de la connexion ou de l'itinérance de l'appareil de communication respectivement impliqué (MT, VOIPT).

11. Système de communication pour la transmission de signaux vocaux (SPS1) entre un appareil de communication émetteur (MT) et un appareil de communication récepteur (VOIPT) sur un chemin de transmission (CP1) passant par un ou plusieurs réseaux de communication (GSMN, DFN, AFN, IN), une pluralité d'unités de traitement de signaux vocaux (TEC, NEC1) et/ou d'unités de codec vocal (NCD1, NCD2, NCD3) étant globalement insérée dans le chemin de transmission (CP1), en particulier selon l'une des revendications précédentes, **caractérisé en ce qu'**au moins une unité de réseau de configuration (NEG1) est prévue pour sélectionner, parmi une pluralité de jeux de paramètres audio (APS1, APS2, APS3) stockés pour différents chemins de transmission (CP1, CP2, CP3), le jeu de paramètres audio (APS1) qui donne, pour le chemin de transmission (CP1) actuellement mis à disposition, une qualité de transmission vocale plus élevée que les jeux de paramètres audio (APS2, APS3) stockés pour les autres chemins de transmission (CP2, CP3) et **en ce que** l'unité de réseau de configuration (NEG1) comporte, pour la transmission des signaux vocaux (SPS1) sur le chemin de transmission actuel (CP1), des moyens de commande (SM) pour configurer au moins l'une des unités de traitement de signaux vocaux traversées (TEC, PW, FI) et/ou des unités de codec vocal (NCD1) de l'appareil de communication émetteur et/ou récepteur (MT, VOIPT) et/ou au moins l'un des éléments de réseau (NEC1) traversés dans le réseau de communication (GSM, DFN, AFN, IN) respectivement impliqué.

12. Élément de réseau de configuration (NEG1) avec des moyens de commande (SM) pour exécuter le procédé selon l'une des revendications précédentes 1 avec 10.
